# EUROPEAN PATENT APPLICATION

(11) **EP 3 026 261 A1**
(43) Date of publication of application: **01.06.2016**
(21) Application number: 15194922.9
(22) Date of filing: 17.11.2015
(51) Int. Cl.: F03D 7/02, F03D 7/04

(54) **WIND FARM, WIND POWER GENERATION SYSTEM**

(30) Priority: 26.11.2014 JP 2014238575
(71) Applicant: Kabushiki Kaisha Toshiba, Tokyo 105-8001 (JP)
(72) Inventor: Matsuda, Hisashi, Tokyo (JP); Tanaka, Motofumi, Tokyo (JP); Osako, Toshiki, Tokyo (JP); Yamazaki, Kenichi, Tokyo (JP); Asayama, Masahiro, Tokyo (JP); Shimura, Naohiko, Tokyo (JP); Inomata, Asako, Tokyo (JP)
(74) Representative: Henkel, Breuer & Partner

(57) **Abstract**

A wind farm of an embodiment includes a wind turbine and an airflow generation device, the wind turbine being installed in plurality in a predetermined installation region. The wind turbines each have a blade attached to a rotor. The airflow generation device includes a first electrode and a second electrode which are provided on a substrate formed of an insulating material. Here, the plural wind turbines include: a first wind turbine located on an upstream side and a second wind turbine located on a more downstream side than the first wind turbine, in a wind direction with a higher yearly frequency than a predetermined value, out of wind directions of wind blowing in the installation region. The airflow generation device is installed on the blade provided in the first wind turbine out of the plural wind turbines.

## Description

### FIELD

Embodiments described herein relate generally to a wind farm and a wind power generation system.

### BACKGROUND

A wind power generation system has a wind turbine in which blades (wind turbine blades) are attached to a rotor, and generates power by the rotor being rotated by utilizing wind power energy which is renewable energy.

In the wind power generation system, separated flows are sometimes generated on surfaces of the blades to vary a power generation amount. For example, when a wind speed or a wind direction suddenly changes, velocity triangles around the blades greatly deviate from a rating point, so that the separated flows are generated in a wide range. It is not easy to sufficiently cope with the sudden change of the wind speed and the wind direction by adjusting a yaw angle or a pitch angle. Therefore, in the wind power generation system, it is difficult to stably maintain power generation output, and thus it is not sometimes easy to enhance efficiency.

As a countermeasure for this, installing an airflow generation device on the surface of the blade has been proposed. The airflow generation device is provided with a pair of electrodes which are apart from each other via a dielectric, and generates an air flow by a voltage being applied between the pair of electrodes. This can suppress the generation of the separated flow to increase a lift of the blade, which can improve the power generation output. That is, by installing the airflow generation device on the surface of the blade, it is possible to obtain "a lift improving effect".

Specifically, it has been confirmed that, in a middle-sized wind turbine (rating 30 kW) and a large-sized wind turbine (megawatt class), it is possible to sufficiently improve the power generation output by installing the airflow generation device on the surface of the blade. Further, it has been confirmed that suppressing the separated flow by using the airflow generation device reduces a pressure loss on a downstream area of the blade to 1/2 to 1/3.

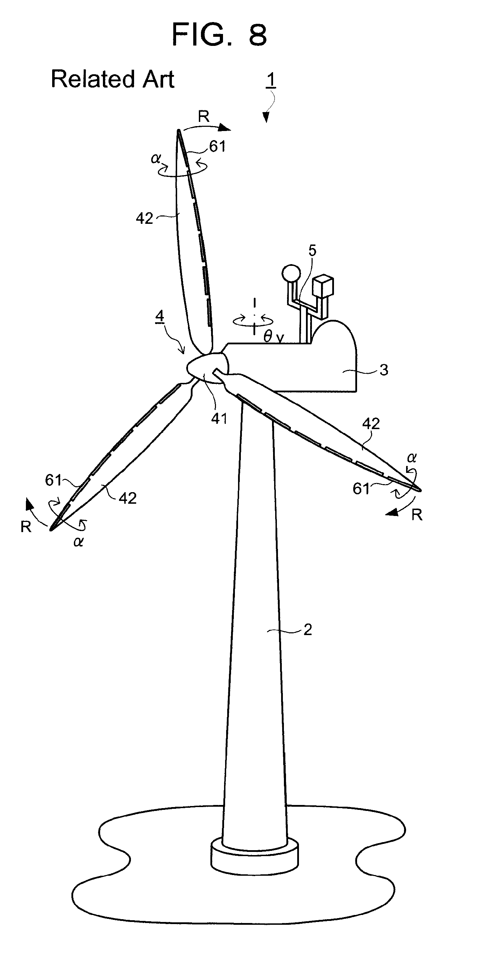

FIG. 8 is a perspective view schematically illustrating a wind turbine in which airflow generation devices are installed, in a wind power generation system according to a related art.

A wind turbine 1 is, for example, a propeller wind turbine of an up-wind type, and as illustrated in FIG. 8, includes a tower 2, a nacelle 3, a rotor 4, and an aerovane unit 5.

In the wind turbine 1, the tower 2 extends along a vertical direction and has its lower end portion fixed to a base (not illustrated) buried in the ground.

In the wind turbine 1, the nacelle 3 is installed at an upper end portion of the tower 2. The nacelle 3 is supported at the upper end portion of the tower 2 so as to be rotatable around a vertical-direction axis in order to adjust a yaw angle θy.

In the wind turbine 1, the rotor 4 is rotatably supported at one side end portion of the nacelle 3, and rotates in a rotation direction R around a horizontal-direction rotation axis. The rotor 4 includes a hub 41 and a plurality of blades 42.

In the rotor 4, the hub 41 includes a tip cover in a semi-ellipsoidal shape and is formed so that an outside diameter of its outer peripheral surface increases as it goes from a windward side toward a leeward side. In the rotor 4, the plural blades 42 are attached around the hub 41 so as to be apart from one another in the rotation direction R. For example, three pieces of the blades 42 are provided, and each of them has one end rotatably supported by the hub 41 for the purpose of adjusting a pitch angle α.

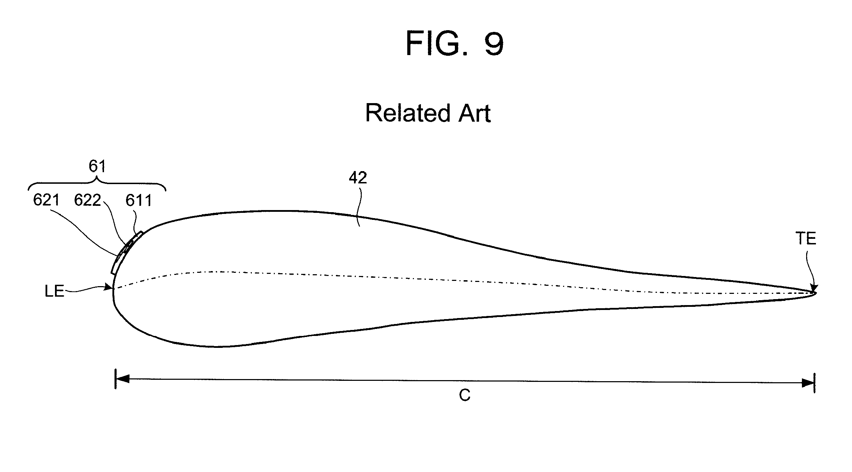

FIG. 9 is a view illustrating one of the blades 42 in the wind power generation system. FIG. 9 illustrates a cross section along a blade thickness direction of the blade 42.

As illustrated in FIG. 9, an airflow generation device 61 is installed on the blade 42. Further, as illustrated in FIG. 8, on each of the plural blades 42, a plurality of the airflow generation devices 61 are installed so as to be arranged in a span direction. Theairflow generation device 61 will be described in detail later.

In the wind turbine 1, the aerovane unit 5 is attached on an upper surface of the nacelle 3 on the leeward side of the blades 42 as illustrated in FIG. 8. Data of the wind speed and the wind direction measured by the aerovane unit 5 are output to a control unit (not illustrated). Then, according to the measured data, the control unit adjusts the yaw angle θy and the pitch angle α. Further, according to the measured data, the control unit controls the operation of the airflow generation devices 61.

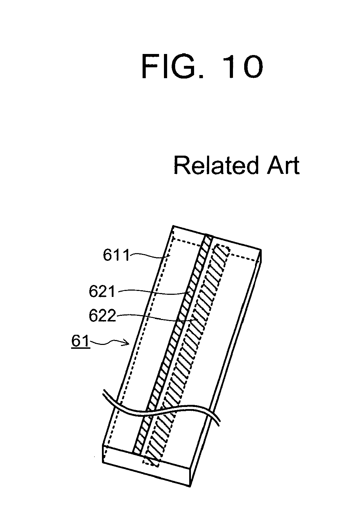

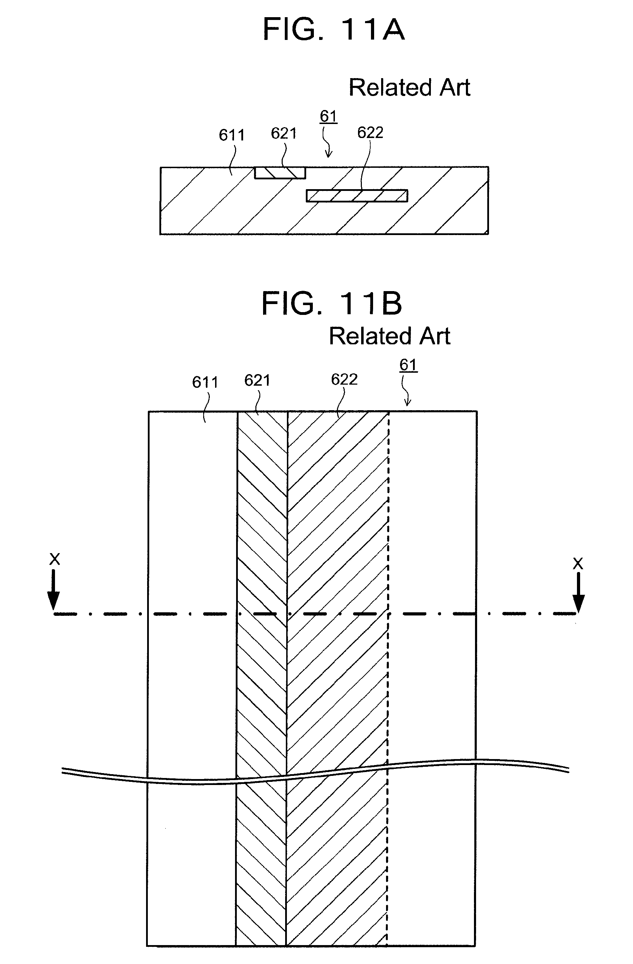

FIG. 10, FIG. 11A, and FIG. 11B are views schematically illustrating the airflow generation device 61 in the wind power generation system. FIG. 10 is a perspective view. FIG. 11A is a cross-sectional view and FIG. 11B is a top view. FIG. 11A corresponds to a cross section in an X-X portion in FIG. 11B. FIG. 10, FIG. 11A, and FIG. 11B illustrate a state of the airflow generation device 61 before it is installed on the blade 42 (refer to FIG. 9).

As illustrated in FIG. 10, FIG. 11A, and FIG. 11B, the airflow generation device 61 includes a substrate 611, a first electrode 621, and a second electrode 622. The airflow generation device 61 has the first electrode 621 and the second electrode 622 which are provided on the substrate 611, and has a thickness of, for example, several mm. The airflow generation device 61 is formed by various works such as, for example, press work and extrusion molding work.

In the airflow generation device 61, the substrate 611 is formed of a dielectric material (insulator). For example, the substrate 611 is formed by using resin such as polyimide resin, silicone resin (silicone rubber), epoxy resin, or fluorocarbon resin, and is flexible. Instead, the substrate 611 may be composed of a plurality of stacked layers of pre-preg sheet in which mica paper is impregnated with epoxy resin, for instance.

In the airflow generation device 61, the first electrode 621 and the second electrode 622 are each formed of a conductive material such as, for example, a metal material.

The first electrode 621 is a plate-shaped body extending linearly. The first electrode 621 is a surface electrode and is provided on a surface (upper surface) of the substrate 611. Here, the first electrode 621 is disposed so that its upper surface is exposed and its surfaces (lower surface, side surfaces) other than the upper surface are in contact with the substrate 611.

The second electrode 622, similarly to the first electrode 621, is a plate-shaped body extending linearly. The second electrode 622 is an internal electrode, and unlike the first electrode 621, is provided inside the substrate 611. That is, the second electrode 622 has an upper surface, a lower surface, and side surfaces in contact with the substrate 611, and is disposed at a deeper position than the first electrode 621. Further, the second electrode 622 extends linearly in the same direction as the extension direction in which the first electrode 621 extends (first direction, longitudinal direction). Here, the second electrode 622 is disposed so that the second electrode 622 and the first electrode 621 are arranged in a direction (second direction) perpendicular to the extension direction (first direction) of the first electrode 621.

As illustrated in FIG. 9, the airflow generation device 61 is provided on the surface of the blade 42. The airflow generation device 61 is bonded to the blade 42 so that its surface (lower surface) opposite the surface (upper surface) on which the first electrode 621 is provided (refer to FIG. 11 A) is in close contact with a blade back-side surface of the blade 42. Further, the first electrode 621 and the second electrode 622 of the airflow generation device 61 are installed at a leading edge LE side portion of the blade back-side surface (upper surface) of the blade 42. The first electrode 621 and the second electrode 622 are installed so as to be arranged in order from the leading edge LE toward a trailing edge TE.

Further, as illustrated in FIG. 8, the plural airflow generation devices 61 are installed on each of the plural blades 42 so as to be arranged in the span (wingspan) direction. Here, the plural airflow generation devices 61 are installed apart from one another, and the extension direction of the first electrode 621 and the second electrode 622 (first direction) is along the span (wingspan) direction.

In the airflow generation device 61, the first electrode 621 and the second electrode 622 are each electrically connected to a voltage applying unit (not illustrated) via a connecting line (not illustrated), though the illustration thereof is omitted. The voltage applying unit is a plasma power source, and applies a voltage between the first electrode 621 and the second electrode 622 according to a control signal output from the control unit (not illustrated), whereby a plasma air flow caused by a dielectric barrier discharge is generated on the surface (upper surface) of the airflow generation device 61. For example, a high-frequency voltage that is pulse-modulated by a low-frequency pulse modulation wave is applied between the first electrode 621 and the second electrode 622, so that the air flow is intermittently generated. The air flow is induced so as to flow, for example, from a first electrode 621 side toward a second electrode 622 side, which suppresses the generation of the separated flow.

A wind farm is a wind power generation system in which a plurality of wind turbines are installed in a predetermined installation region in order to obtain a large power generation amount. In the wind farm, there may be a case where the airflow generation device cannot be installed on all the plural wind turbines, because of a cost reduction, for instance. Therefore, it is sometimes difficult to sufficiently improve power generation output.

Further, in the wind power generation system, the airflow generation device is sometimes corroded by erosion to be damaged when the airflow generation device is installed on the blade.

Therefore, a problem to be solved by the present invention is to provide a wind farm and a wind power generation system that are capable of realizing at least one of improvement of power generation output, prevention of the occurrence of the erosion, and the like.

### BRIEF DESCRIPTION OF THE DRAWINGS

FIG. 1 is a view illustrating a state where a plurality of wind turbines 1 are disposed in a wind farm according to a first embodiment.
FIG. 2 is a chart illustrating "an inflow wind increasing effect" in the wind farm according to the first embodiment.
FIG. 3A is a chart illustrating "the inflow wind increasing effect" in the wind farm according to the first embodiment.
FIG. 3B is a chart illustrating "the inflow wind increasing effect" in the wind farm according to the first embodiment.
FIG. 4 is a view illustrating a state where a plurality of wind turbines 1 are disposed in a wind farm according to a modification example of the first embodiment.
FIG. 5 is a view schematically illustrating a wind turbine in which airflow generation devices are installed, in a wind power generation system according to a second embodiment.
FIG. 6 is a view schematically illustrating a state where a plurality of wind turbines 1 are disposed in a wind farm according to a modification example of the second embodiment.
FIG. 7 is a view illustrating a state where a plurality of wind turbines 1 are disposed in a wind farm according to a modification example of the second embodiment.
FIG. 8 is a perspective view schematically illustrating a wind turbine in which airflow generation devices are installed, in a wind power generation system according to a related art.
FIG. 9 is a view illustrating one blade in the wind power generation system.
FIG. 10 is a view schematically illustrating the airflow generation device in the wind power generation system.
FIG. 11A is a view schematically illustrating the airflow generation device in the wind power generation system.
FIG. 11B is a view schematically illustrating the airflow generation device in the wind power generation system.

### DETAILED DESCRIPTION

A wind farm of an embodiment includes a wind turbine and an airflow generation device, the wind turbine being installed in plurality in a predetermined installation region. The wind turbines each have a blade attached to a rotor. The airflow generation device includes a first electrode and a second electrode which are provided on a substrate formed of an insulating material, and generates an air flow by a voltage being applied between the first electrode and the second electrode. Here, the plural wind turbines include: a first wind turbine located on an upstream side and a second wind turbine located on a more downstream side than the first wind turbine, in a wind direction with a higher yearly frequency than a predetermined value, out of wind directions of wind blowing in the installation region. The airflow generation device is installed on the blade provided in the first wind turbine out of the plural wind turbines.

Embodiments will be described with reference to the drawings.

### <First Embodiment>

### [A] Structure and so on

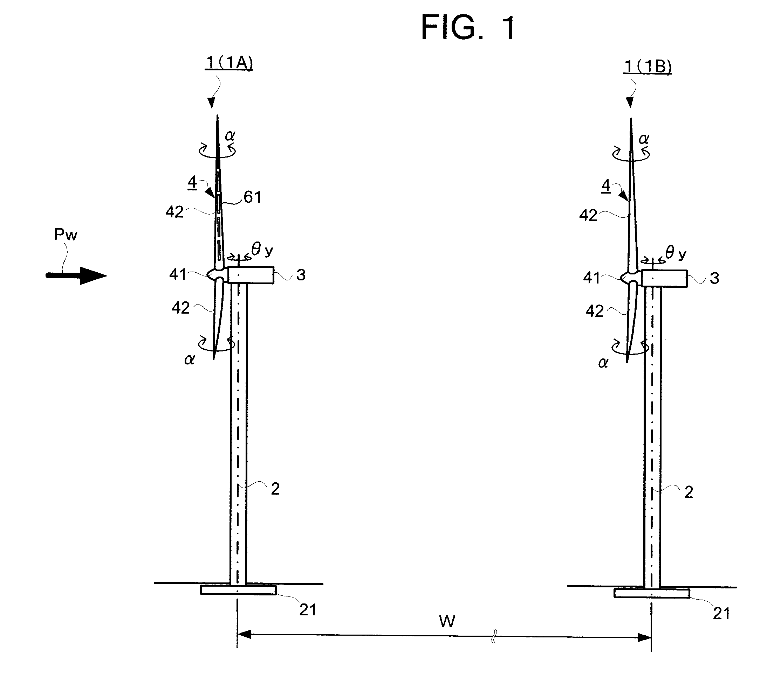

FIG. 1 is a view illustrating a state where a plurality of wind turbines 1 are disposed in a wind farm according to a first embodiment. FIG. 1 is a side view and illustrates some of the plural wind turbines 1.

FIG. 1 illustrates two of the wind turbines 1 arranged adjacently to each other in a wind direction with a higher yearly frequency than a predetermined value, out of wind directions of wind blowing in an installation region where the plural wind turbines are installed in the wind farm. Here, the two wind turbines 1 arranged along a prevailing wind direction Pw (wind direction with the highest frequency throughout a year) are illustrated as examples. Therefore, if wind blowing from north to south is prevailing wind and the prevailing wind direction Pw is a north-to-south direction, the two wind turbines 1 illustrated in FIG. 1 are wind turbines arranged in this north-to-south direction, the left wind turbine 1A (first wind turbine) being located on an upstream side (north side) and the right wind turbine 1B (second wind turbine) being located on a downstream side (south side).

Note that the frequency (F) of the wind direction is, for example, a ratio of a time (Tc) measured for each of winds blowing in the respective sixteen directions to a time (Ta - Tb) equal to the total time (Ta) from which a calm time (Tb) is subtracted (that is, F = Tc/Ta - Tb)). The calm time (Tb) is a time in which a wind speed is measured as 0.4 m/s or less.

As illustrated in FIG. 1, the wind farm has a plurality of airflow generation devices 61 as well as the plural wind turbines 1.

In the wind farm, the plural wind turbines 1 each are a propeller wind turbine of an up-wind type and have blades 42 attached to a rotor 4, as in the case of the aforesaid related art (refer to FIG. 8).

The plural wind turbines 1 are arranged apart from one another in a horizontal direction. That is, out of the plural wind turbines 1, the wind turbine 1A located on the upstream side in the prevailing wind direction Pw and the wind turbine 1B located on the more downstream side than the wind turbine 1A are installed at an interval. For example, the plural wind turbines 1 are disposed so that a distance W between the plural wind turbines 1 (distance between center axes of towers 2) becomes ten times a rotation diameter D of the blade 42 or more (W ≥ 10D).

Further, the plural wind turbines 1 are installed so that a rotation plane of the blades 42 provided in the wind turbine 1A located on the upstream side in the prevailing wind direction Pw and a rotation plane of the blades 42 provided in the wind turbine 1B located on the downstream side include portions overlapping with each other in the prevailing wind direction Pw.

In the wind farm, the airflow generation devices 61 are structured the same as in the case of the aforesaid related art (refer to FIG. 8 to FIG. 11B). That is, the airflow generation device 61 has a first electrode 621 and a second electrode 622 which are provided on a substrate 611 formed of an insulating material and is structured to generate an air flow by a voltage being applied between the first electrode 621 and the second electrode 622, though the illustration of this structure is omitted.

In this embodiment, the airflow generation devices 61 are not installed in all the plural wind turbines 1 but are installed in some of the plural wind turbines 1.

Specifically, the airflow generation device 61 is installed in the wind turbine 1A (first wind turbine) located on the upstream side in the prevailing wind direction Pw out of the plural wind turbines 1, as illustrated in FIG. 1. Here, the airflow generation device 61 is installed in plurality on the blade 42 along a span (wingspan) direction so as to be arranged at intervals, as in the case of the above-described related art (refer to FIG. 8).

On the other hand, the airflow generation device 61 is not installed in the wind turbine 1B (second wind turbine) located on the more downstream side than the wind turbine 1A (first wind turbine) located on the upstream side, in the prevailing wind direction Pw.

### [B] Summary (Effect and so on)

As described above, in this embodiment, the airflow generation devices 61 are installed in the wind turbine 1A (first wind turbine) located on the upstream side in the wind direction with the higher yearly frequency than the predetermined value (for example, the prevailing wind direction Pw), and the airflow generation device 61 is not installed in the wind turbine 1B (second wind turbine) located on the downstream side of the wind turbine 1A. As previously described, when the airflow generation devices 61 are installed in the wind turbine 1A, "the lift improving effect" is obtained. That is, by generating air flows by driving the airflow generation devices 61, it is possible to suppress the generation of separated flows on surfaces of the blades 42 to increase the lift of the blades 42.

When the airflow generation devices 61 are installed in the wind turbine 1A, "an inflow wind increasing effect", which will be described in detail later, is obtained in addition to "the lift improving effect". Specifically, by generating the air flows by using the airflow generation devices 61, it is possible to alleviate that inflow wind flowing to the blades 42 of the wind turbine 1A is reduced in wind speed by being intercepted by the blades 42. That is, it is possible to increase the wind speed of the inflow wind flowing to the blades 42 of the wind turbine 1A.

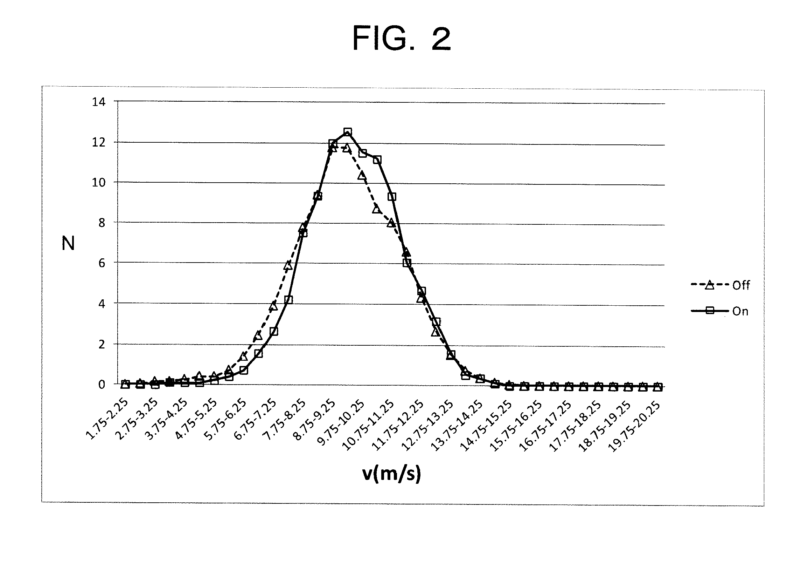

FIG. 2 is a chart illustrating "the inflow wind increasing effect" in the wind farm according to the first embodiment.

FIG. 2 illustrates a relation between the wind speed v of the inflow wind and its frequency N. Here, the horizontal axis represents the wind speed v (m/s) of the inflow wind, and the vertical axis represents the frequency N (number). The relation when the air flow is generated by using the airflow generation device 61 (On) and the relation when the air flow is not generated (Off) are illustrated. Incidentally, in FIG. 2, the wind speed v of the inflow wind is an average value of values measured by using an ultrasonic anemometer (not illustrated) installed on a nacelle 3 when the case where the air flow is generated (On) and the case where the air flow is not generated (Off) are alternated repeatedly every ten minutes.

As illustrated in FIG. 2, the inflow wind has a higher frequency N at high wind speeds v when the air flow is generated by using the airflow generation device 61 (On) than when the air flow is not generated (Off). It is understood from this result that "the inflow wind increasing effect" is obtained.

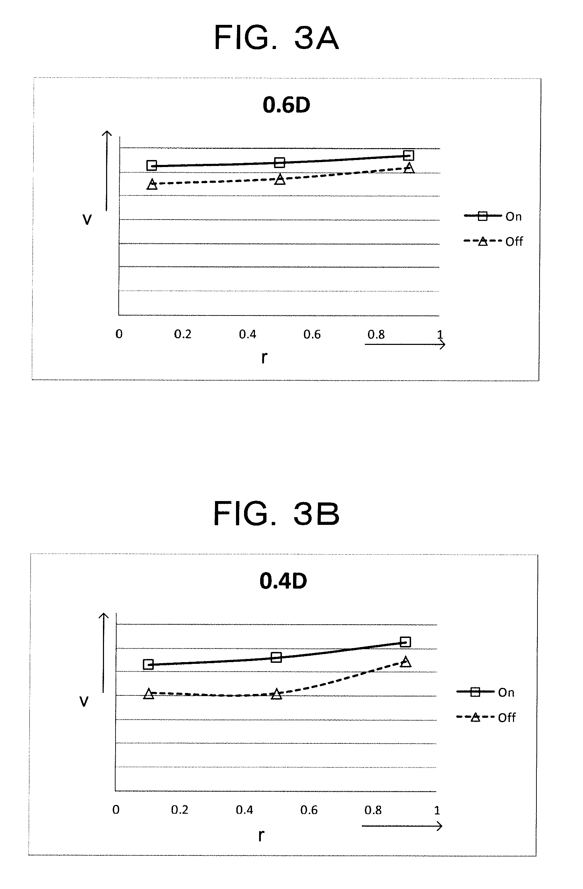

FIG. 3A and FIG. 3B, similarly to FIG. 2, are views illustrating "the inflow wind increasing effect" in the wind farm according to the first embodiment.

FIG. 3A and FIG. 3B are results of three-dimensional fluid analysis and each illustrate a relation between a position r in a radial direction (span direction) and the wind speed v of the inflow wind. Here, the horizontal axis represents the position r in the radial direction, a left end side being a blade root side of the blade 42 and a right end side being a blade tip side of the blade 42. Further, the vertical axis represents the wind speed v of the inflow wind. The relation under a condition where the generation of the separated flow is absent, that is, at the time corresponding to the case where the air flow is generated by using the airflow generation device 61 (On) and the relation under a condition where the generation of the separated flow is present, that is, at the time corresponding to the case where the air flow is not generated (Off) are illustrated. FIG. 3A illustrates results at a portion that is on the upstream side of the wind turbine and is apart by a distance equal to the rotation diameter D of the wind turbine multiplied by 0.6 (that is, 0.6D). FIG. 3B illustrates results at a portion that is on the upstream side of the wind turbine and is apart by a distance equal to the rotation diameter D of the wind turbine multiplied by 0.4 (that is, 0.4D).

As illustrated in FIG. 3A and FIG. 3B, at the time corresponding to the case where the air flow is generated by using the airflow generation device 61 (On), the wind speed v of the inflow wind is higher than at the time corresponding to the case where the air flow is not generated (Off). Here, at all the positions r in the radial direction (span direction), the wind speed v of the inflow wind is higher at the time corresponding to the case where the air flow is generated (On) than at the time corresponding to the case where the air flow is not generated (Off). It is understood from this that "the inflow wind increasing effect" is obtained similarly to the above. Especially in an area from the blade root portion to a blade center portion in the span direction of the blade 42 which area has a large chord length, "the inflow wind increasing effect" by the airflow generation device 61 is large.

Therefore, in the wind farm of this embodiment, the inflow wind flowing to the upstream wind turbine 1A in which the airflow generation devices 61 are installed has a higher wind speed than when the airflow generation device 61 is not installed, owing to "the inflow wind increasing effect". Accordingly, wind having passed through the upstream wind turbine 1A (first wind turbine) also has a high wind speed, so that inflow wind flowing to the wind turbine 1B (second wind turbine) located on the downstream side of the wind turbine 1A also has a high wind speed. When an average wind speed in a year increases by 0.1 m/s, a power generation amount in a year increases by several %. As a result, it is possible to increase power generation efficiency also in the wind turbine 1B (second wind turbine) located on the downstream side where the airflow generation device 61 is not installed.

That is, in the wind farm of this embodiment, the upstream wind turbine 1A (first wind turbine) where the airflow generation devices 61 are installed can have increased power generation efficiency owing to "the inflow wind increasing effect" as well as "the lift increasing effect". Further, in this embodiment, it is possible to increase power generation efficiency also in the downstream wind turbine 1B (second wind turbine) where the airflow generation device 61 is not installed, owing to "the inflow wind increasing effect" produced in the upstream wind turbine 1A (first wind turbine).

Therefore, in the wind farm of this embodiment, it is possible to effectively improve power generation output even when the airflow generation device 61 cannot be installed in all the plural wind turbines 1.

### [C] Modification Example

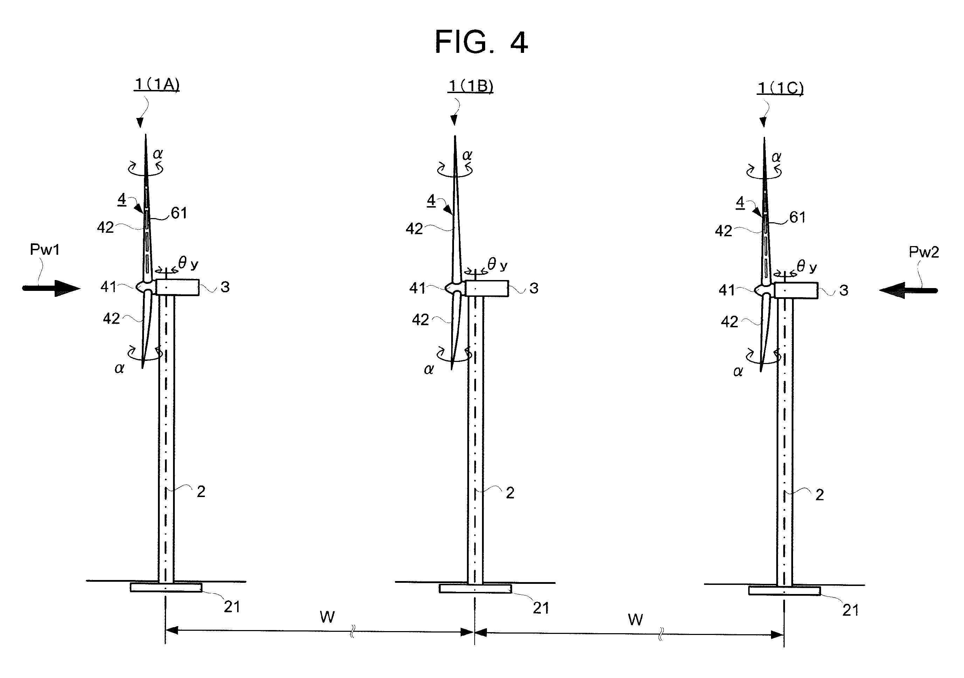

FIG. 4 is a view illustrating a state where a plurality of wind turbines 1 are disposed in a wind farm according to a modification example of the first embodiment. FIG. 4, similarly to FIG. 1, is a side view and illustrates some of the plural wind turbines 1.

FIG. 4 illustrates a case where the number of wind directions with a higher yearly frequency than a predetermined value, out of wind directions in which wind blows in an installation region where the plural wind turbines 1 are installed, is plural. Here, in a case where there are a first prevailing wind direction Pw1 and a second prevailing wind direction Pw2 opposite the first prevailing wind direction Pw1, three of the wind turbines 1 which are arranged along both the first prevailing wind direction Pw1 and the second prevailing wind direction Pw2 are illustrated as examples. FIG. 4 illustrates a state where a yaw angle θy is adjusted when prevailing wind flows along the first prevailing wind direction Pw1. Incidentally, when prevailing wind flows along the second prevailing wind direction Pw2, which case is not illustrated, the yaw angle θy is adjusted so that a nacelle 3 comes into a state of being rotated half relatively to the state illustrated in FIG. 4.

As illustrated in FIG. 4, when the number of the wind directions with the higher yearly frequency than the predetermined value (the first prevailing wind direction Pw1, the second prevailing wind direction Pw2, and the like) is plural, airflow generation devices 61 are installed on blades 42 provided in the plural wind turbines 1 located on upstream sides in the plural wind directions respectively.

For example, the airflow generation devices 61 are installed on each blade 42 provided in a wind turbine 1A located on an upstream side in the first prevailing wind direction Pw1 out of the three wind turbines 1. Further, the airflow generation devices 61 are installed on each blade 42 provided in a wind turbine 1C located on an upstream side in the second prevailing wind direction Pw2. On the other hand, the airflow generation device 61 is not installed on blades 42 in a wind turbine 1B located on a downstream side in the first prevailing wind direction Pw1 and the second prevailing wind direction Pw2.

As described above, in this modification example, since the airflow generation devices 61 are installed in the wind turbines 1A, 1C (first wind turbines) located on the upstream sides in the first prevailing wind direction Pw1 and the second prevailing wind direction Pw2, it is possible to increase power generation efficiency owing to the "inflow wind increasing effect" as well as "the lift improving effect", as in the above-described first embodiment. Further, in this modification example as in the above-described first embodiment, it is possible to increase power generation efficiency also in the downstream wind turbine 1B (second wind turbine) where the airflow generation device 61 is not installed, owing to "the inflow wind increasing effect" produced by the upstream wind turbines 1A, 1C (first wind turbines). Therefore, in the wind farm of this modification example, it is possible to effectively improve power generation output.

In the above, the case where the airflow generation devices 61 are installed in the single wind turbine 1 (1A, 1C) located on the most upstream side in each of the prevailing wind directions Pw, Pw1, Pw2, out of the plural wind turbines 1, is described, but it should be noted that this is not restrictive. The wind farm may be structured such that the airflow generation devices 61 are installed in the plural wind turbines 1 located on the upstream side in each of the prevailing wind directions Pw, Pw1, Pw2 and the airflow generation device 61 is not installed in the other wind turbines 1 located on the downstream side.

### <Second Embodiment>

### [A] Structure and so on

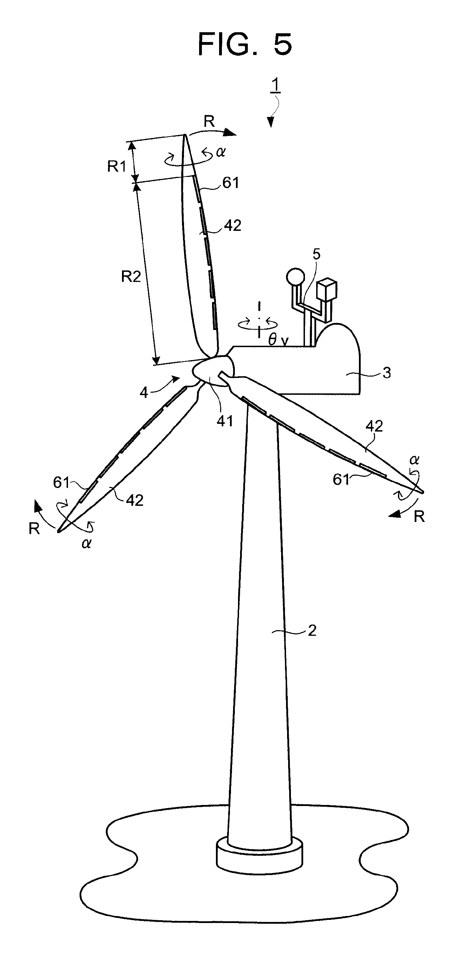

FIG. 5 is a view schematically illustrating a wind turbine where airflow generation devices are installed, in a wind power generation system according to a second embodiment. FIG. 5 is a perspective view similarly to FIG. 8.

As illustrated in FIG. 5, in the wind power generation system of this embodiment, how the airflow generation devices 61 are installed in the wind turbine 1 is different from that in the related art (refer to FIG. 8).

This embodiment is the same as the case of the aforesaid related art (refer to FIG. 8) except in the above point and relating points. Therefore, in this embodiment, a description of the same parts as those in the aforesaid related art will be omitted when appropriate.

In this embodiment, as illustrated in FIG. 5, the airflow generation devices 61 are not installed in a span direction of each blade 42 all along an area from a blade root to a blade tip, unlike the case of the aforesaid related art (refer to FIG. 8).

Specifically, the airflow generation device 61 is not installed in a first region R1 located on a blade tip side in the span direction of the blade 42 (radial direction of a rotor 4). The airflow generation devices 61 are installed in a second region R2 located on a more blade root side than the first region R1 located on the blade tip side. In the second region R2, the plural airflow generation devices 61 are disposed at intervals.

### [B] Summary (Effect and so on)

In the blade 42, a relative circumferential speed in the first region R1 located on the blade tip side in the span direction is higher than that in the second region R2 located on the blade root side. Accordingly, the airflow generation device is likely to be damaged in the first region R1 due to the generation of erosion. On the other hand, in the wind power generation system of this embodiment, the airflow generation device 61 is not installed in the first region R1 located on the blade tip side in the span direction of the blade 42, and the airflow generation devices 61 are installed in the second region R2 located on the more blade root side than the first region R1.

Therefore, in the wind power generation system of this embodiment, it is possible to effectively prevent the airflow generation device 61 from being damaged due to the occurrence of the erosion.

Further, as described above, "the inflow wind increasing effect" brought about by the airflow generation device 61 is large in an area from a blade root portion to a blade center portion in the span direction of the blade 42 which area has a large chord length. Therefore, in this embodiment, it is possible to sufficiently obtain "the inflow wind increasing effect" since the airflow generation devices 61 are installed in the second region R2 located on the blade root side.

In this embodiment, in the span direction of the blade 42, the second region R2 is preferably a region where the relative circumferential speed becomes 60 m/s or less when the wind turbine 1 is in a rated operation. In this case, it is possible to more effectively prevent the airflow generation devices 61 from being damaged due to the occurrence of the erosion.

For example, when a rotation speed at the time of the rated operation is 21 rpm in a case of the wind turbine 1 whose rotation diameter D is 66 m, a relative circumferential speed V at a portion located at an 80% position of a span length becomes 58 m/s (r = (66/2) × 0.8, ω = 2n × (21/60), V = rω = 58). Therefore, it is preferable to install the airflow generation devices 61 in, for example, an area from the blade root to a portion apart from the blade root by an 80% distance of the span length, in the span direction of the blade 42.

### [C] Modification Examples

In the above-described second embodiment, the case where, in the wind power generation system having the single wind turbine 1, the airflow generation device 61 is not installed in the first region R1 of each of the blades 42 but the airflow generation devices 61 are installed in the second region R2 located on the more blade root side than the first region R1 is described, but this is not restrictive. In a wind farm being a wind power generation system having a plurality of wind turbines 1, the airflow generation devices 61 may be installed on blades 42 in the same manner as in the case of the above-described second embodiment.

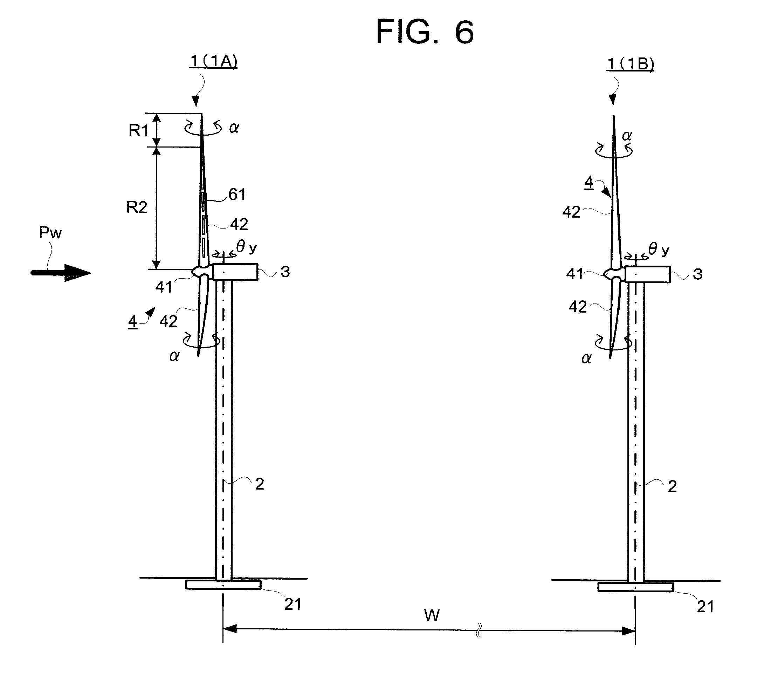

FIG. 6 is a view illustrating a state where a plurality of wind turbines 1 are disposed in a wind farm according to a modification example of the second embodiment. FIG. 6, similarly to FIG. 1, is a side view and illustrates some of the plural wind turbines 1.

FIG. 6, similarly to FIG. 1, illustrates two of the wind turbines 1 which are arranged adjacently to each other in a wind direction with a higher yearly frequency than a predetermined value, out of wind directions of wind blowing in an installation region where the plural wind turbines are installed in the wind farm. Here, the two wind turbines 1 arranged along a prevailing wind direction Pw (wind direction with the highest frequency through a year) are illustrated as examples.

As illustrated in FIG, 6, airflow generation devices 61 may be installed on blades 42 of a wind turbine 1A (first wind turbine) located on an upstream side in the prevailing wind direction Pw, out of the plural wind turbines 1, in the same manner as in the case of the above-described second embodiment (refer to FIG. 5). That is, on each of the blades 42 included in the wind turbine 1A (first wind turbine) located on the upstream side in the prevailing wind direction Pw, without the airflow generation device 61 installed in a first region R1 located on a blade tip side in a span direction of the blade 42, the airflow generation devices 61 may be installed in a second region R2 located on a more blade root side than the first region R1 located on the blade tip side.

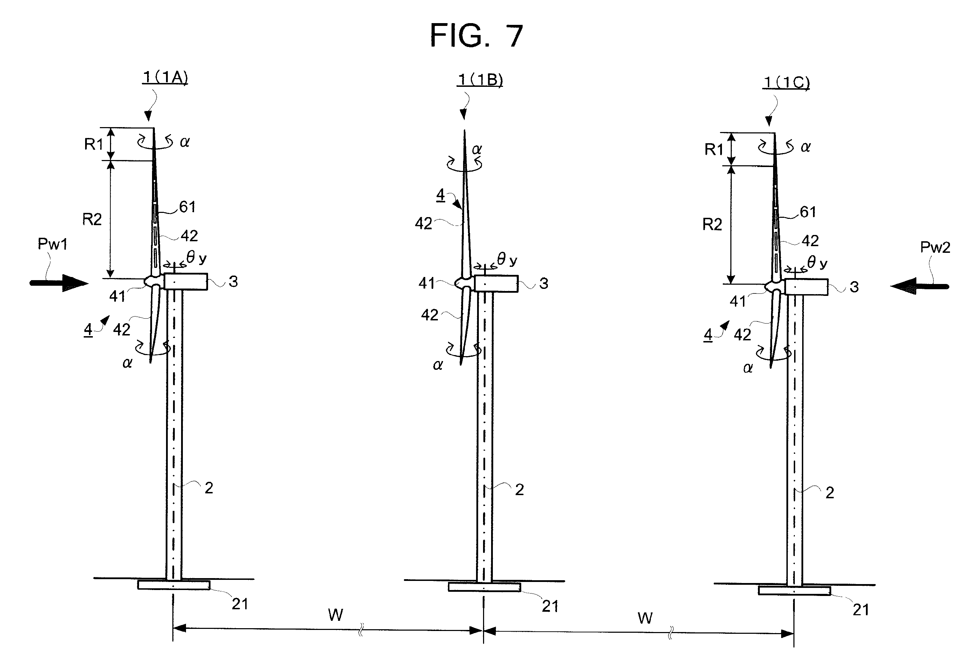

FIG. 7 is a view illustrating a state where a plurality of wind turbines 1 are disposed in a wind farm according to a modification example of the second embodiment. FIG. 7, similarly to FIG. 4, is a side view and illustrates some of the plural wind turbines 1.

FIG. 7, similarly to FIG. 4, illustrates a case where the number of wind directions with a higher yearly frequency than a predetermined value, out of wind directions of wind blowing in an installation region where the plural wind turbines 1 are installed, is plural. Here, in a case where there are a first prevailing wind direction Pw1 and a second prevailing wind direction Pw2 opposite the first prevailing wind direction Pw1, three of the wind turbines 1 arranged along both the first prevailing wind direction Pw1 and the second prevailing wind direction Pw2 are illustrated as examples.

As illustrated in FIG. 7, airflow generation devices 61 may be installed on blades 42 of a wind turbine 1A (first wind turbine) located on an upstream side in the first prevailing wind direction Pw1, out of the plural wind turbines 1, in the same manner as in the above-described second embodiment (refer to FIG. 5). That is, on each of the blades 42 included in the wind turbine 1A (first wind turbine) located on the upstream side in the first prevailing wind direction Pw1, without the airflow generation device 61 installed in a first region R1 located on a blade tip side in a span direction of the blade 42, the airflow generation devices 61 may be installed in a second region R2 located on a more blade root side than the first region R1 located on the blade tip side.

Similarly to the above, the airflow generation devices 61 may be installed on blades 42 of a wind turbine 1C (first wind turbine) located on an upstream side in the second prevailing wind direction Pw2, out of the plural wind turbines 1, in the same manner as in the above-described second embodiment (refer to FIG. 5). That is, on each of the blades 42 included in the wind turbine 1C (first wind turbine) located on the upstream side in the second prevailing wind direction Pw2, without the airflow generation device 61 installed in a first region R1 located on a blade tip side in a span direction of the blade 42, the airflow generation devices 61 may be installed in a second region R2 located on a more blade root side than the first region R1 located on the blade tip side.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A wind farm comprising:
a wind turbine having a rotor and a blade attached to the rotor, the wind turbine being installed in plurality in a predetermined installation region; and
an airflow generation device including a substrate, a first electrode, and a second electrode, the first electrode and the second electrode being provided on the substrate formed of an insulating material, the airflow generation device generating an air flow by a voltage being applied between the first electrode and the second electrode,
wherein the plural wind turbines include: a first wind turbine located on an upstream side and a second wind turbine located on a more downstream side than the first wind turbine, in a wind direction with a higher yearly frequency than a predetermined value, out of wind directions of wind blowing in the installation region; and
wherein the airflow generation device is installed on the blade provided in the first wind turbine out of the plural wind turbines.

2. The wind farm according to claim 1,
wherein, when there are a plurality of wind directions with a higher yearly frequency than the predetermined value, out of the wind directions of the wind blowing in the installation region, the airflow generation device is provided on the blade provided in the first wind turbine located on an upstream side in each of the plural wind directions.

3. The wind farm according to claim 1 or 2,
wherein the airflow generation device is not installed in a first region located on a blade tip side in a span direction of the blade and is installed in a second region located on a more blade root side than the first region.

4. The wind farm according to claim 3,
wherein the second region is a portion which is apart from a blade root in the span direction of the blade by an 80% distance of a span length.

5. A wind power generation system comprising:
a wind turbine having a rotor and a blade attached to the rotor; and
an airflow generation device including a substrate, a first electrode, and a second electrode, the first electrode and the second electrode being provided on the substrate formed of an insulating material, the airflow generation device generating an air flow by a voltage being applied between the first electrode and the second electrode,
wherein the airflow generation device is not installed in a first region located on a blade tip side in a span direction of the blade and is installed in a second region located on a more blade root side than the first region.

6. The wind power generation system according to claim 5,
wherein the second region is a region where a relative circumferential speed becomes 60 m/s or less, in the span direction of the blade, when the wind turbine is in a rated operation.
